# EUROPEAN PATENT SPECIFICATION

(11) **EP 3 909 425 B1**
(45) Date of publication and mention of the grant of the patent: **10.07.2024**
(21) Application number: 20769918.2
(22) Date of filing: 13.03.2020
(51) Int. Cl.: A01K 61/60, A01K 61/54

(54) **DEVICE AND METHOD FOR CULTIVATING OYSTERS**
VORRICHTUNG UND VERFAHREN FÜR DIE KULTIVIERUNG VON AUSTERN
DISPOSITIF ET PROCÉDÉ POUR LA CULTURE D'HUÎTRES

(30) Priority: 14.03.2019 BR 102019004962
(43) Date of publication of application: 17.11.2021
(73) Proprietor: Trotta, Paulo Ferreira, Cep: 21921-100 Rio de Janeiro (BR)
(72) Inventor: Trotta, Paulo Ferreira, Cep: 21921-100 Rio de Janeiro (BR)
(74) Representative: Nordic Patent Service A/S
(86) International application number: PCT/BR2020/000008
(87) International publication number: WO 2020/181344

(56) References cited:
- JP-U- S5 995 871
- KR-A- 20130 043 764
- US-A- 2 989 945
- US-A- 2 989 945
- US-A- 3 702 599
- US-A- 4 266 509
- US-A- 4 344 384
- US-A- 4 793 284
- US-A- 5 477 813
- US-B1- 9 339 016

## Description

The present patent description refers to a structure used for oysters cultivation.

Oyster cultivation in Brazil and other countries is performed in cylindrical baskets, that basically consists of cylinders, with lateral surfaces formed of plastic screen, in netting form, divided in layers by parallel planes the cylinders bases, 15 centimeters apart from each other. The access to cylinders layers is performed by cylinder lateral, through an opening sealed by velcro, the opening being vertical and parallel to cylinder axis.

A drawback of this type of cultivation is the fact that sea pollution blocks the netting forming the cylinder lateral surface, demanding periodic cleaning of the cylinder baskets.

Another drawback is that oyster cultivation in cylindrical baskets cannot be done near mussel cultivation, since mussel cultivation demand a large amount of impurities, which blocks the cylindrical baskets netting.

A further drawback is the fact that cylindrical baskets have as single sealing against the access of unauthorized people the lateral surface Velcro sealing. This enables malicious people to access the oysters, causing damages to the farmers.

JP S59 95871 U describes a device and method for scallop cultivation where scallops are placed in vertically stacked box-like containers arranged on a base and closed with a lid, the containers having a hollow center and vertical guide bars used for alignment of the containers.

Aiming to solve such drawbacks, the present invention defined in claim 1 discloses a device for oyster cultivation comprising the following elements: Base (1), having four holes (2), through which the base (1) is fixed to the bottom of the sea. Base (1) has four other holes, wherein four vertical tubes (3) are fixed, serving as the guide(s) for settlement of box(es) on base (1), after the oysters seed are put in these boxes; Lid (5), having a ring (6), fixing one of the ends of rope (7). The other end of rope (7), after passing through the hole of buoy (8), is fixed to counterweight (9). Ring (6), rope (7) and buoy (8) and counterweight (9), interconnected, help to maintain the structure in vertical position at the bottom of the sea during tide variations as well as during any sea turbulence at the cultivation location. The present invention also discloses a method for oyster cultivation as defined in claim 5. Preferred embodiments are defined in the dependent claims.

The invention will be better understood by means of the detailed description in accord with the attached figures.

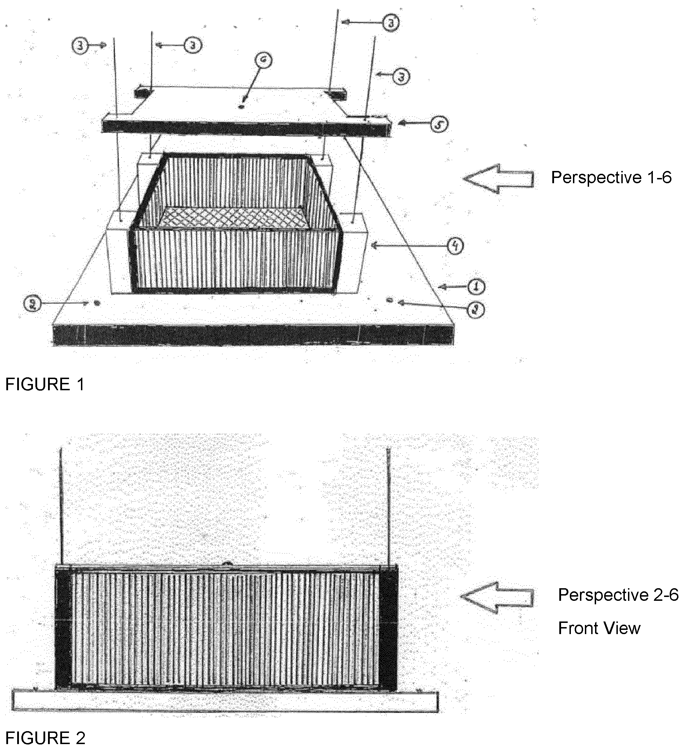

Figure 1 represents a view of the structure object of the invention, having a single box (4).
Figure 2 represents the front view of the structure object of the invention, having a single box (4).

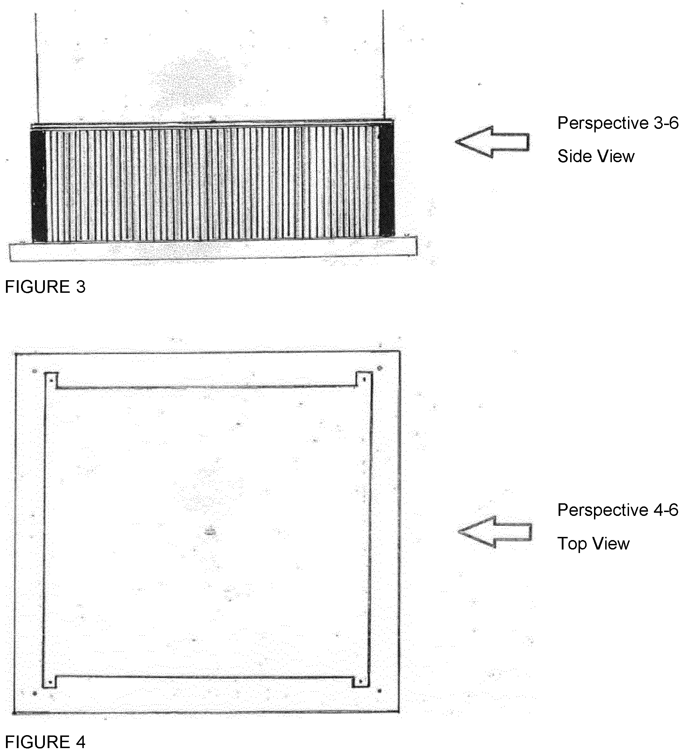

Figure 3 represents the side view of the structure object of the invention, having a single box (4).
Figure 4 represents the top view of the structure object of the invention.

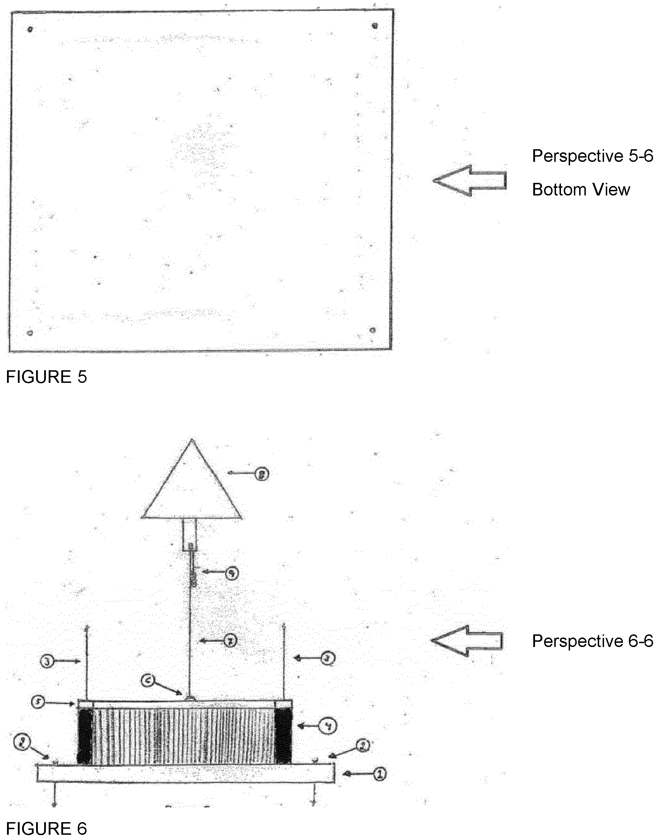

Figure 5 represents the bottom view of the structure object of the invention.
Figure 6 presents the structure object of the invention, having a single box (4), with its constitutive elements interconnected.

The installation of the structure at the sea follows the following steps: First) the base (1) is launched at sea; Second) base (1) is fixed to the bottom of the sea through pins installed in holes (2); Third) tubes (3) are fixed in the other four holes of base (1); Fourth) Settlement of box (4) to base (1) of the structure, using tubes (3) as guides; Fifth) Settlement of lid (5) on the box (4), after insertion of oyster seeds inside box (4); Sixth) sealing of lid (5), to avoid strange elements to the cultivation to access the oysters; Seventh) Fixing one of the ends of rope (7) to ring (6) of lid (5); Eighth) Fixing the other end of rope (7) to counterweight (9) after passing it through the hole of buoy (8). Ring (6), fixed to rope (7), buoy (8) and the counterweight (9), fixed to the other end of rope (7), help to maintain the structure stable in vertical position at the bottom of the sea. The structure can have a greater number of boxes (4), being the lid (5) settled only in the last box.

## Claims

1. A device for oyster cultivation comprising:
- a base (1) with means for attachment to a bottom of the sea, said means for attachment comprising four holes (2) and four pins that pass through said holes (2), said pins being for fixing the base to the bottom of the sea;
- at least one box (4) configured to hold oyster seeds; and
- a lid (5) placed on top of the at least one box (4); - the at least one box (4) being removable from the base (1); and the device further comprising:
- four vertical tubes (3) fixed to the base (1) and configured to serve as guide for settlement of the at least one box (4) on the base (1);
- a buoy (8) and a counterweight (9); and
- a rope (7) with one end attached to a ring (6) on the lid (5) and another end attached to the counterweight (9), after passing through a hole in the buoy (8).

2. A device according to any one of claim 1, wherein the at least one box (4) comprises lateral surfaces formed of a plastic screen in netting form.

3. A device according to any one of claims 1 or 2, wherein two or more boxes (4) are provided between the lid (5) and the at least one box (4), the boxes (4) being stacked on top of each other, and the lid (5) being put only on top of the top box (4).

4. A device according to any one of claims 1 to 3, wherein the lid (5) is sealed on top of the box (4) to remove any gap between the lid (5) and the box (4).

5. A method for oyster cultivation comprising the steps of:
a) inserting oyster seeds inside at least one box (4) configured to hold oyster seeds;
b) fixing a base (1) on a bottom of the sea by four pins passing through four holes (2) of the base (1);
c) positioning the at least one box (4) in the base (1) at the bottom of the sea; and
d) closing the at least one box (4) with a lid (5) by placing the lid (5) on top of the at least one box (4); wherein the lid (5) has a rope (7) with one end attached to a ring (6) on the lid (5) and another end attached to a counterweight (9), after passing through a hole in a buoy (8);
wherein the at least one box (4) is placed over the base (1) with the help of four vertical tubes (3) fixed to the base (1), wherein the vertical tubes (3) serve as a guide for settlement of the at least one box (4) to the base (1).

6. A method according to claim 5, wherein two or more boxes (4) are provided between the lid (5) and the at least one box (4), placed over the base (1) with the help of the vertical tubes (3), the boxes (4) being stacked on top of each other, and the lid (5) put only on top of the topmost box (4).

## Patentansprüche

1. Vorrichtung zur Austernzucht, umfassend:
- eine Basis (1) mit Mitteln zur Anbringung an einem Boden des Meeres, wobei die Mittel zur Anbringung vier Löcher (2) und vier Stifte umfassen, die durch die Löcher (2) führen, wobei die Stifte zum Befestigen der Basis an dem Boden des Meeres dienen;
- mindestens einen Kasten (4), der eingerichtet ist, um Saataustern zu halten; und
- einen Deckel (5), der oben auf dem mindestens einen Kasten (4) platziert ist;
- wobei der mindestens eine Kasten (4) von der Basis (1) abnehmbar ist; und die Vorrichtung ferner umfasst:
- vier vertikale Röhren (3), die an der Basis (1) befestigt und eingerichtet sind, um als Führung zum Absetzen des mindestens einen Kastens (4) auf der Basis (1) zu dienen;
- eine Boje (8) und ein Gegengewicht (9); und
- ein Seil (7), dessen eines Ende an einem Ring (6) auf dem Deckel (5) angebracht ist und dessen anderes Ende an dem Gegengewicht (9) angebracht ist, nachdem es durch ein Loch in der Boje (8) geführt wurde.

2. Vorrichtung nach einem der Ansprüche 1, wobei der mindestens eine Kasten (4) seitliche Flächen umfasst, die aus einem Kunststoffgitter in Netzform gebildet sind.

3. Vorrichtung nach einem der Ansprüche 1 oder 2, wobei zwei oder mehr Kästen (4) zwischen dem Deckel (5) und dem mindestens einen Kasten (4) vorgesehen sind, wobei die Kästen (4) übereinander gestapelt sind und der Deckel (5) nur oben auf den obersten Kasten (4) gesetzt ist.

4. Vorrichtung nach einem der Ansprüche 1 bis 3, wobei der Deckel (5) oben auf dem Kasten (4) abgedichtet ist, um jeden Spalt zwischen dem Deckel (5) und dem Kasten (4) zu entfernen.

5. Verfahren zur Austernzucht, umfassend die Schritte zum:
a) Einbringen von Saataustern in mindestens einen Kasten (4), der eingerichtet ist, um Saataustern zu halten;
b) Befestigen einer Basis (1) auf einem Boden des Meeres durch vier Stifte, die durch vier Löcher (2) der Basis (1) führen;
c) Positionieren des mindestens einen Kastens (4) in der Basis (1) an dem Boden des Meeres; und
d) Verschließen des mindestens einen Kastens (4) mit einem Deckel (5) durch Platzieren des Deckels (5) oben auf dem mindestens einen Kasten (4); wobei der Deckel (5) ein Seil (7) aufweist, dessen eines Ende an einem Ring (6) auf dem Deckel (5) angebracht ist und dessen anderes Ende an einem Gegengewicht (9) angebracht ist, nachdem es durch ein Loch in einer Boje (8) geführt wurde;
wobei der mindestens eine Kasten (4) mit Hilfe von vier vertikalen Röhren (3), die an der Basis (1) befestigt sind, über der Basis (1) platziert wird, wobei die vertikalen Röhren (3) als Führung zum Absetzen des mindestens einen Kastens (4) auf der Basis (1) dienen.

6. Verfahren nach Anspruch 5, wobei zwei oder mehr Kästen (4) zwischen dem Deckel (5) und dem mindestens einen Kasten (4) vorgesehen sind, die mit Hilfe der vertikalen Röhren (3) auf der Basis (1) platziert werden, wobei die Kästen (4) übereinander gestapelt werden und der Deckel (5) nur oben auf den obersten Kasten (4) gesetzt wird.

## Revendications

1. Dispositif pour l'ostréiculture comprenant :
- une base (1) dotée de moyens permettant la fixation à un fond marin, lesdits moyens de fixation comprenant quatre trous (2) et quatre broches traversant lesdits trous (2), lesdites broches étant destinées à fixer la base au fond marin ;
- au moins une boîte (4) configurée pour contenir des naissains d'huîtres ; et
- un couvercle (5) placé sur le dessus de l'au moins une boîte (4) ;
- l'au moins une boîte (4) étant détachable de la base (1) ; et le dispositif comprenant en outre :
- quatre tubes verticaux (3) fixés à la base (1) et configurés pour servir de guide pour l'installation de l'au moins une boîte (4) sur la base (1) ;
- un flotteur (8) et un contrepoids (9) ; et
- une corde (7) dont une extrémité est attachée à un anneau (6) sur le couvercle (5) et une autre extrémité est attachée au contrepoids (9), après le passage à travers un trou dans le flotteur (8).

2. Dispositif selon la revendication 1, dans lequel l'au moins une boîte (4) comprend des surfaces latérales constituées d'un tamis en plastique sous forme de filet.

3. Dispositif selon l'une quelconque des revendications 1 ou 2, dans lequel deux ou plusieurs boîtes (4) sont disposées entre le couvercle (5) et l'au moins une boîte (4), les boîtes (4) étant empilées les unes sur les autres, et le couvercle (5) étant placé uniquement sur le dessus de la boîte supérieure (4).

4. Dispositif selon l'une quelconque des revendications 1 à 3, dans lequel le couvercle (5) est scellé sur le dessus de la boîte (4) pour supprimer tout espace entre le couvercle (5) et la boîte (4).

5. Procédé d'ostréiculture comprenant les étapes suivantes :
a) insertion de naissains d'huîtres à l'intérieur d'au moins une boîte (4) configurée pour contenir des naissains d'huîtres ;
b) fixation d'une base (1) à un fond marin à l'aide de quatre broches traversant quatre trous (2) de la base (1) ;
c) positionnement de l'au moins une boîte (4) dans la base (1) au niveau du fond marin ; et
d) fermeture de l'au moins une boîte (4) à l'aide d'un couvercle (5), par agencement du couvercle (5) sur le dessus de l'au moins une boîte (4) ; dans lequel le couvercle (5) comporte une corde (7) dont une extrémité est attachée à un anneau (6) sur le couvercle (5) et une autre extrémité est attachée à un contrepoids (9) après le passage à travers un trou dans un flotteur (8) ;
dans lequel l'au moins une boîte (4) est placée sur la base (1) à l'aide de quatre tubes verticaux (3) fixés à la base (1), dans lequel les tubes verticaux (3) servent de guide pour l'installation de l'au moins une boîte (4) sur la base (1).

6. Procédé selon la revendication 5, dans lequel deux ou plusieurs boîtes (4) sont disposées entre le couvercle (5) et l'au moins une boîte (4), placées sur la base (1) à l'aide des tubes verticaux (3), les boîtes (4) étant empilées les unes sur les autres, et le couvercle (5) étant placé uniquement sur le dessus de la boîte supérieure (4).
